**Europäisches Patentamt**

**European Patent Office**

**Office européen des brevets**

(19)

(11) Veröffentlichungsnummer: **0 491 244 A2**

# (12) EUROPÄISCHE PATENTANMELDUNG

(21) Anmeldenummer: **91120916.1**

(22) Anmeldetag: **05.12.91**

(51) Int. Cl.5: **H04M 3/42**, H04M 3/38, H04M 7/00, H04Q 3/72

(30) Priorität: **19.12.90 DE 4040752**

(43) Veröffentlichungstag der Anmeldung: **24.06.92 Patentblatt 92/26**

(84) Benannte Vertragsstaaten: **AT CH DE ES FR GB IT LI**

(71) Anmelder: **SIEMENS AKTIENGESELLSCHAFT Wittelsbacherplatz 2 W-8000 München 2(DE)**

(72) Erfinder: **Wille, Klaus, Dipl.-Ing. Passartstrasse 24 W-8000 München 80(DE)**

(54) **Kommunikationsnetz mit mehreren Kommunikationsanlagen.**

(57) Die Erfindung betrifft ein Kommunikationsnetz mit mehreren Kommunikationsanlagen, an deren Teilnehmeranschlüsse Kommunikationsendgeräte, insbesondere Fernsprechgeräte, angeschlossen sind, und die jeweils eine zentrale Programmsteuereinrichtung sowie einen zentralen Speicher mit mittels den Kommunikationsendgeräten zugeordneten Anschlußnummern adressierbaren kommunikationsendgeräteindividuellen Speichersegmenten zur Aufnahme individueller Daten, insbesondere Berechtigungsdaten, der angeschlossenen Kommunikationsendgeräte aufweisen, wobei durch Eingeben eines kommunikationsendgeräteindividuellen Identifizierungskennzeichens an einem beliebigen anderen Kommunikationsendgerät diesem die dem Identifizierungskennzeichen entsprechenden kommunikationsendgeräteindividuellen Daten verfügbar gemacht werden. In jeder Kommunikationsanlage sind alle netzweiten Identifizierungskennzeichen gespeichert, so daß die entsprechende Überprüfung autonom in jeder Anlage durchgeführt werden kann. Dabei werden die externen Teilnehmer in jeder Anlage zu Gruppen mit sogenannten fiktiven Heimatanschlüssen zusammengefaßt, wobei jeder Gruppe unterschiedliche Berechtigungen zugeteilt werden können.

FIG 1

Die Erfindung betrifft ein Kommunikationsnetz mit mehreren Kommunikationsanlagen, an deren Teilnehmeranschlüsse Kommunikationsendgeräte, insbesondere Fernsprechendgeräte, angeschlossen sind, und die jeweils eine zentrale Programmsteuereinrichtung sowie einen zentralen Speicher mit mittels den Kommunikationsendgeräten zugeordneten Anschlußnummern adressierbaren kommunikationsendgeräteindividuellen Speichersegmenten zur Aufnahme individueller Daten, insbesondere Berechtigungsdaten, der angeschlossenen Kommunikationsendgeräte aufweisen, wobei durch Eingeben eines kommunikationsendgeräteindividuellen Identifizierungskennzeichens an einem beliebigen anderen Kommunikationsendgerät diesem die dem Identifizierungskennzeichen entsprechenden kommunikationsendgeräteindividuellen Daten verfügbar gemacht werden.

Bei derartigen Kommunikationsanlagen mit kommunikationsendgeräteindividuellen Identifizierungskennzeichen handelt es sich um sogenannte personenbezogene Vermittlungssysteme, d. h. Berechtigungen, Vergebührung, Kurzwahlziele, Namentasten und viele weitere Leistungsmerkmale sind personenindividuell einrichtbar. Dabei dient der Personenidentifizierung das kommunikationsendgeräteindividuelle Identifizierungskennzeichen, welches auch als persönliche Identifizierungsnummer, kurz PIN genannt, bekannt ist.

Dabei gibt es pro Person nur eine persönliche Rufnummer, die für alle Dienstklassen gleich ist. Das heißt, eine Person kann mit ihrer Rufnummer an ihrem Sprach-, Ttx-, Fax-Gerät erreicht werden. Hierbei wird davon ausgegangen, daß zwar jede Person ein Telefon besitzt, die Non-Voice-Geräte aber in der Regel von mehreren Personen gemeinsam benutzt werden. Das Leistungsmerkmal "Persönliche Identifizierungsnummer", kurz PIN genannt, dient für den Besitzer einer Station der Personenidentifizierung an seinem eigenen Anschluß. Damit hat der Besitzer dieser Station Zugriff auf solche Leistungsmerkmale, die wegen einer Berechtigungsumschaltung auf eine niedere Berechtigungsklasse für alle anderen Benutzer gesperrt sind.

Darüberhinaus dient die PIN der Personenidentifizierung bei mobilen Teilnehmern. Unter einem mobilen Teilnehmer versteht man einen Teilnehmer, welcher ein fremdes Kommunikationsendgerät benutzt und sich an diesem mittels seiner PIN identifiziert. Läßt sich ein solcher Fremdbenutzer an einer Station identifizieren, gelten für ihn dieselben Berechtigungen und Möglichkeiten, die er an seiner eigenen Station, der sogenannten Heimatstation, aufgrund seiner Normalberechtigungsklasse hat. Nach Aktivierung der PIN werden also für den Verbindungsaufbau und für Leistungsmerkmalsanforderungen die Berechtigungen und Daten, wie z.

B. Wahlbewertungsgruppe, Verkehrsbeziehungsgruppe, Rufnummernspeicher, usw., der Person herangezogen, die sich mittels ihrer PIN identifiziert hat.

In personenbezogenen Vermittlungssystemen lassen sich mehr Personen einrichten als laut Ausbaustufe des Vermittlungssystems Kommunikationsendgeräte vorhanden sind. Es können also Personen mit individuellen Berechtigungen und Leistungsmerkmalen eingerichtet werden, die immer als mobile Teilnehmer fungieren. Diese besitzen keinen physikalisch beschalteten, sondern nur einen fiktiven Heimatanschluß.

Das Leistungsmerkmal "Persönliche Identifizierungsnummer" gilt für jeden mobilen Teilnehmer nur innerhalb seiner eigenen Kommunikationsanlage, welcher er als Teilnehmer zugeordnet ist, d. h. daß das Leistungsmerkmal "Persönliche Identifizierungsnummer" nur innerhalb der Kommunikationsanlage gilt, in welcher sich der Heimatanschluß des mobilen Teilnehmers befindet.

Es ist für einen mobilen Teilnehmer nicht möglich, von einer Station einer anderen beliebigen Kommunikationsanlage seines Kommunikationsnetzes auf seine persönlichen individuellen Berechtigungen und Leistungsmerkmale zurückzugreifen. Auch ist eine Aktivierung einer Anrufumleitung für seinen Heimatanschluß von einer anderen beliebigen Kommunikationsanlage ebenfalls nicht möglich. Weiterhin ist keine Rufnummernanzeige eines mobilen Teilnehmers bei dem Verbindungspartner in einer beliebigen Kommunikationsanlage gegeben. Es wird nämlich die Rufnummer der von dem mobilen Teilnehmer benutzten Station und nicht seine persönliche Rufnummer, welche ihm für seinen Heimatanschluß zugeteilt ist, angezeigt.

Die Aufgabe der vorliegenden Erfindung besteht darin, ein Kommunikationsnetz der eingangs genannten Art anzugeben, bei welcher das Leistungsmerkmal "Persönliche Identifizierungsnummer" netzweit in jeder anderen beliebigen Kommunikationsanlage dieses Netzes realisierbar ist.

Dies wird erfindungsgemäß für ein Kommunikationsnetz der obengenannten Art dadurch gelöst, daß in mindestens einer der Kommunikationsanlagen neben den Identifizierungskennzeichen von an dieselbe Kommunikationsanlage angeschlossenen Kommunikationsendgeräten auch die Identifizierungskennzeichen von Kommunikationsendgeräten wenigstens einer weiteren Kommunikationsanlage gespeichert sind, und daß eine um wenigstens eine Größenordnung geringere als die Anzahl der Identifizierungskennzeichen wenigstens dieser weiteren Kommunikationsanlage bemessene Zahl von fiktiven Teilnehmeranschlüssen eingerichtet ist, mit deren Anschlußnummern, von denen wenigstens eine mehreren dieser Identifizierungskennzeichen zugeordnet ist, anschlußindividuelle Speicherbereiche adressierbar sind, die eine allen zugehörigen Identifizierungskennzeichen gemeinsame Kombination von kommunikationsendgeräteindividuellen Daten enthalten.

Bei dem erfindungsgemäßen Kommunikationsnetz werden in den einzelnen Kommunikationsanlagen zusätzliche Anschlüsse eingerichtet, die jeweils stellvertretend für eine bestimmte Gruppe externer Teilnehmer fremder Kommunikationsanlagen desselben Kommunikationsnetzes als ganz normaler Heimatanschluß dienen, z. B. für die PIN-Verifikation, die Vergebührung, die Berechtigungszuteilung, Kurzrufnummern, Wahlbewertungsgruppen, Verkehrsbeziehungsregelung, usw.

Bei dem erfindungsgemäßen Kommunikationsnetz sind in jedem Netzknoten alle netzweiten PIN's des gesamten Netzes gespeichert, so daß die PIN-Prüfung autonom in jedem Knoten durchgeführt werden kann, auch dann, wenn zwischen den Anlagen keine $S_0/S_2$-Networking-Verbindung besteht.

Eine zweckmäßige Weiterbildung des erfindungsgemäßen Kommunikationsnetzes ist dadurch gekennzeichnet, daß für bestimmte Berechtigungsdaten die infragekommenden fiktiven Teilnehmeranschlüsse zur Umwertung des externen Identifizierungskennzeichens in die zugehörige netzweite Rufnummer des Heimatanschlusses betriebstechnisch besonders gekennzeichnet sind.

Durch das Adressieren des Heimatanschlusses des externen mobilen Teilnehmers lassen sich die Leistungsmerkmale "Anrufumleitung"` "Briefkasten für netzweite Server" und "Rufnummernanzeige" netzweit realisieren. Dadurch, daß nur bei diesen Leistungsmerkmalen der echte Heimatanschluß des mobilen Teilnehmers adressiert wird, während bei allen anderen Leistungsmerkmalen mit dem stellvertretenden fiktiven Heimatanschluß gearbeitet wird, läßt sich eine erhebliche Reduzierung des Entwicklungsaufwandes erreichen.

Über den Rückverweis auf den echten Heimatanschluß mittels der netzweiten Rufnummer, die zu dem entsprechenden Identifizierungskennzeichen gehört, ist auch die periodische Aktualisierung der Anrufumleitung und der Briefkasten-Anzeige an der fremden, benutzten Station durchzuführen.

Nachfolgend wird die Erfindung anhand eines in der Zeichnung dargestellten Ausführungsbeispiels näher erläutert.

FIG 1     zeigt den prinzipiellen Aufbau eines Netzwerkes gemäß der vorliegenden Erfindung, und

FIG 2     zeigt den prinzipiellen Aufbau eines Speichers für die fiktiven Heimatanschlüsse gemäß der vorliegenden Erfindung.

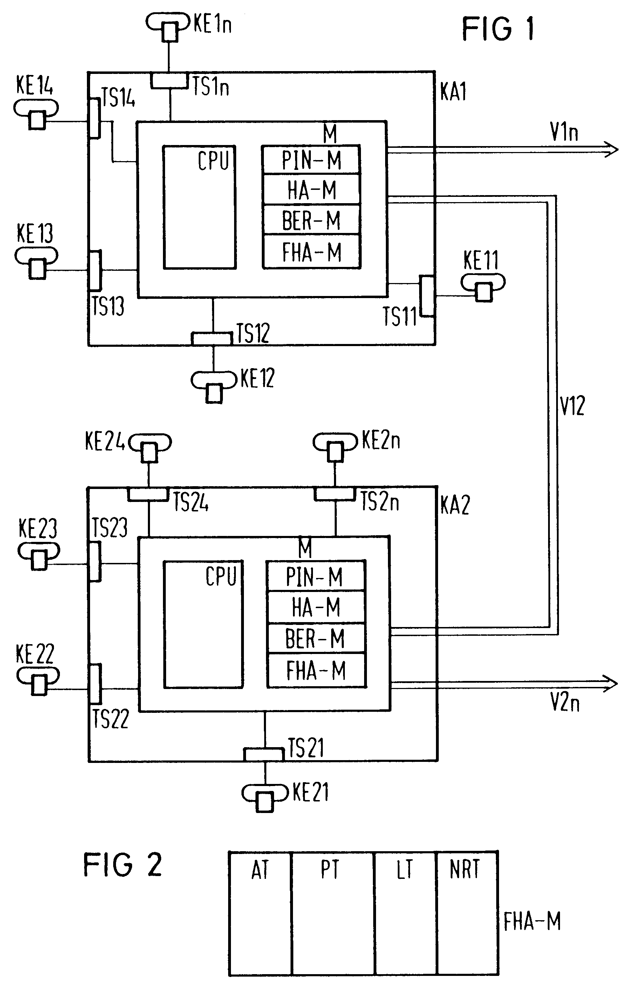

FIG 1 zeigt einen Ausschnitt eines Kommunikationsnetzes, wobei lediglich zwei Netzknoten, nämlich die Kommunikationsanlagen KA1 und KA2 dargestellt sind. Bei diesen Kommunikationsanlagen handelt es sich um moderne Vermittlungssysteme, wie sie z. B. in "ISDN im Büro - HICOM", Sonderausgabe Telcom Report und Siemens-Magazin COM, Siemens AG, 1985, beschrieben sind.

Den Kommunikationsanlagen KA1 und KA2 sind jeweils eine Anzahl von Kommunikationsendgeräten KE11... KE1n und KE21...KE2n zugeordnet. Jedes Kommunikationsendgerät ist dabei über entsprechende periphere Teilnehmerschaltungen TS11...TS1n und TS21...TS2n mit dem eigentlichen Vermittlungssystem, bestehend aus einer zentralen Programmsteuereinrichtung CPU, einem zentralen Speicher M und einer hier nicht dargestellten zentralen Koppelanordnung verbunden.

Innerhalb des zentralen Speichers M erfolgt die Zuordnung von Heimatanschlüssen, persönlichen Identifizierungsnummern und den jeweiligen Berechtigungen für die Teilnehmer dieser Kommunikationsanlage. Dabei ist jeweils immer einer PIN (persönliche Identifizierungsnummer) ein bestimmter Heimatanschluß, d. h. die Anschlußnummer des als Heimatanschluß dienenden Kommunikationsendgerätes, zugeordnet. Diesem Heimatanschluß sind dann die jeweiligen Berechtigungen zugeordnet. Dieser Zuordnung dienen die im jeweiligen zentralen Speicher M eingerichteten speziellen Speicher, nämlich der Speicher PIN-M für die Abspeicherung der einzelnen PIN's, der Speicher HA-M für die Abspeicherung der den einzelnen PIN's zugeordneten Heimatanschlüssen und der Speicher BER-M für die Abspeicherung der den einzelnen PIN's zugeordneten Berechtigungen. Auf die Ansteuerung der einzelnen Teilspeicher soll hier nicht näher eingegangen werden, da diese für die Erfindung nicht wesentlich sind und jedem Fachmann bekannt sind.

Darüberhinaus können Personen mit individuellen Berechtigungen und Leistungsmerkmalen eingerichtet werden, die immer als mobile Teilnehmer fungieren. Diese besitzen keinen physikalisch beschalteten, sondern nur einen fiktiven Heimatanschluß.

Nach Aktivierung der PIN werden also für den Verbindungsaufbau und für Leistungsmerkmalsanforderungen die Berechtigungen und Daten, wie Wahlbewertungsgruppe, Verkehrsbeziehungsgruppe, Rufnummernspeicher, usw., der Person herangezogen, die sich mittels ihrer PIN identifiziert hat. Dabei ist es gleichgültig, ob die PIN manuell über die Tastatur oder mit Hilfe eines lesbaren Code-Ausweises eingegeben wird.

Solange sich nun der mobile Teilnehmer innerhalb einer Kommunikationsanlage, d. h. innerhalb ein und derselben Vermittlungsanlage, befindet, treten keine Probleme auf, da jede PIN in dem vorher beschriebenen Zusammenhang abgespeichert ist.

Im folgenden soll nun beschrieben werden, wie gemäß vorliegender Erfindung das Leistungsmerkmal "Mobiler Teilnehmer" mit allen Vorteilen und ohne zusätzlichen Bedienungsaufwand netzweit durchgeführt werden kann. Es wird dabei davon ausgegangen, daß die einzelnen Kommunikationsanlagen eines gemeinsamen Kommunikationsnetzes über Verbindungsleitungen, wie z. B. V12, V1n, V2n miteinander verbunden sind.

Erfindungsgemäß sind in jeder Kommunikationsanlage eines Kommunikationsnetzes zusätzlich alle PIN's aller Teilnehmer der fremden Kommunikationsanlage in einem zusätzlichen Speicher für fiktive Heimatanschlüsse FHA-M abgelegt. Dieser Speicher FHA-M besteht im wesentlichen aus vier Teilen, der Adressiertabelle AT, der Tabelle für die externen PIN's PT, der Tabelle für die Verbindungsleitungen LT und der Tabelle mit den netzweiten Rufnummern NRT.

Die Adressiertabelle AT dient der Adressierung der PIN-Tabelle PT. Da die PIN's ausschließlich vom Kunden bestimmt werden, kann die PIN selber nicht für eine direkte Adressierung in der Tabelle benutzt werden, sondern muß gesucht werden. Da die PIN-Anordnung nach Suchkriterien in der PIN-Tabelle PT selber aus Gründen des Umfangs nicht möglich ist, enthält die Adressiertabelle Pointer auf die PIN's, wobei die Adressiertabelle nach Suchkriterien geordnet ist. Die Tabelle für die externen PIN's enthält alle vorgegebenen externen PIN's.

Damit nun der Realisierungsaufwand für das Leistungsmerkmal "Netzweite PIN" minimiert werden kann, sind die mobilen Teilnehmer der fremden Kommunikationsanlagen zu gruppieren. Für die PIN's fremder Kommunikationsanlagen werden sogenannte fiktive Heimatanschlüsse eingerichtet, in denen die Berechtigungen, Wahlbewertungsgruppe, Verkehrsbeziehungsregelung, Kurzwahlziele, usw., abgelegt sind. Wie bei der Realisierung des Leistungsmerkmals für interne PIN's werden hier dieselben Prozeduren für mobile Teilnehmer ohne eigenen Heimatanschluß in der betreffenden Kommunikationsanlage benutzt. Damit lassen sich beliebige Eigenschaften für Gruppen von externen Teilnehmern freizügig unter Verwendung vorhandener Mittel einrichten. Der Anschluß, der stellvertretend für eine Gruppe externer Teilnehmer in einer Kommunikationsanlage eingerichtet wird, dient als ganz normaler Heimatanschluß für PIN-Verifikation, Vergebührung, Berechtigungszuteilung, Kurzrufnummern, Wahlbewertungsgruppen, Verkehrsbeziehungsregelung, usw.

Für einzelne externe Teilnehmer einer Kommunikationsanlage können sogar individuelle Namentasten- und Direktrufziele in allen besuchten Kommunikationsanlagen statisch eingerichtet sein. Da die mögliche Anzahl von fiktiven Teilnehmeranschlüssen in jeder Kommunikationsanlage begrenzt ist, ist eine Gruppierung der externen Teilnehmer bei der betriebstechnischen Einrichtung durchzuführen, wobei für eine Gruppe externer Teilnehmer in den meisten Fällen die Einrichtung eines nicht beschalteten analogen Anschlusses als fiktiver Heimatanschluß ausreichend ist.

Für die netzweiten Leistungsmerkmale "Anrufumleitung", "Briefkasten für netzweite Server" und "Anzeige der Rufnummer" muß der fiktive Heimatanschluß für die externen PIN's betriebstechnisch besonders gekennzeichnet sein, z. B. mit einem besonderen Berechtigungsbit. Nur diese Leistungsmerkmale adressieren den echten Heimatanschluß des mobilen Teilnehmers mittels der zuvor eingegebenen PIN, während alle anderen Leistungsmerkmale mit dem stellvertretenden fiktiven Heimatanschluß arbeiten, wodurch sich eine erhebliche Reduzierung des Entwicklungsaufwands erreichen läßt.

Damit bei den zuletzt genannten Leistungsmerkmalen, welche den Zugriff auf den echten Heimatanschluß des mobilen Teilnehmers benötigen, eine Adressierung erfolgt, muß jede externe PIN in die zugehörige netzweite Rufnummer umgewertet werden können. Dazu dient der vierte Teil der für die externen PIN's notwendige Speicherteil NRT.

Ferner dient die Umsetzung der externen PIN in die externe netzweite Rufnummer für Rufnummernanzeigen, da der an der fremden Kommunikationsanlage benutzte fiktive Heimatanschluß ja nur stellvertretend für eine ganze Gruppe mobiler Teilnehmer genutzt wird.

Über den Rückverweis auf den echten Heimatanschluß mittels der netzweiten Rufnummer, welche der jeweiligen PIN zugeordnet ist, ist auch die periodische Aktualisierung der Anrufumleitung und Briefkastenanzeige an der fremden benutzten Station durchzuführen.

Durch die periodische Aktualisierung initiiert von der fremden Station, z. B. alle 30 Sekunden, reduziert sich der Realisierungsaufwand erheblich gegenüber einer Lösung mit einem Verweis von der Heimatstation zu den fiktiven Heimatanschlüssen, an denen eine Identifikation erfolgte.

## Patentansprüche

1. Kommunikationsnetz mit mehreren Kommunikationsanlagen, an deren Teilnehmeranschlüsse Kommunikationsendgeräte, insbesondere Fernsprechendgeräte, angeschlossen sind, und die jeweils eine zentrale Programmsteuereinrichtung sowie einen zentralen Speicher mit mittels den Kommunikationsendgeräten zugeordneten Anschlußnummern adressierbaren kommunikationsendgeräteindividuellen Speichersegmenten zur Aufnahme individueller Daten, insbesondere Berechtigungsdaten, der angeschlossenen Kommunikationsendgeräte aufweisen, wobei durch Eingeben eines kommunikationsendgeräteindividuellen Identifizierungskennzeichens an einem beliebigen anderen Kommunikationsendgerät diesem die dem Identifizierungskennzeichen entsprechenden kommunikationsendgeräteindividuellen Daten verfügbar gemacht werden,
**dadurch gekennzeichnet,**
daß in mindestens einer der Kommunikationsanlagen neben den Identifizierungskennzeichen von an dieselbe Kommunikationsanlage angeschlossenen Kommunikationsendgeräten auch die Identifizierungskennzeichen von Kommunikationsendgeräten wenigstens einer weiteren Kommunikationsanlage gespeichert sind, daß eine um wenigstens eine Größenordnung geringer als die Anzahl der Identifizierungskennzeichen wenigstens dieser weiteren Kommunikationsanlage bemessene Zahl von fiktiven Teilnehmeranschlüssen eingerichtet ist, mit deren Anschlußnummern, von denen wenigstens eine mehreren dieser Identifizierungskennzeichen zugeordnet ist, anschlußindividuelle Speicherbereiche adressierbar sind, die eine allen zugehörigen Identifizierungskennzeichen gemeinsame Kombination von kommunikationsendgeräteindividuellen Daten enthalten.

2.  Kommunikationsnetz nach Anspruch 1,
    **dadurch gekennzeichnet,**
    daß für bestimmte Berechtigungsdaten die infragekommenden fiktiven Teilnehmeranschlüsse zur Umwertung der externen Identifizierungskennzeichen in die zuhörige netzweite Rufnummer des Heimatanschlusses betriebstechnisch besonders gekennzeichnet sind.

# FIG 1

KE1n

KE14   TS14   TS1n                                              KA1

                                              M              V1n

                CPU        PIN-M

                           HA-M

KE13                       BER-M

                           FHA-M

                                        KE11

TS13                                TS11

        TS12

        KE12                                                   V12

KE24                    KE2n

        TS24            TS2n         KA2

KE23   TS23

                                              M

                CPU        PIN-M

                           HA-M

KE22                       BER-M

                           FHA-M                              V2n

TS22

        TS21

        KE21

# FIG 2

| AT | PT | LT | NRT |
|----|----|----|-----|
|    |    |    |     |

FHA-M